# EUROPÄISCHE PATENTANMELDUNG

(11) **EP 0 717 269 A2**
(43) Veröffentlichungstag der Anmeldung: **19.06.1996**
(21) Anmeldenummer: 95118505.7
(22) Anmeldetag: 24.11.1995
(51) Int. Cl.: G01F 1/66

(54) **Verfahren und Vorrichtung zur berührungsfreien Messung des Massedurchsatzes in Förderleitungen bei Zweiphasenströmungen mit Hilfe von Mikrowellen**

(30) Priorität: 13.12.1994 DE 4444248
(71) Anmelder: Conrads, Hans-Georg, Dipl.-Ing., D-39179 Barleben (DE)
(72) Erfinder: Conrads, Hans-Georg, Dipl.Ing., D-39179 Barleben (DE); Conrads, Johannes, Prof.Dr., D-52428 Jülich (DE)
(74) Vertreter: Leinung, Günter

(57) **Zusammenfassung**

Die Erfindung findet vorrangig bei der Verbrennung von Kohlestaub in Kohlekraftwerken Anwendung, und sie bezieht sich auf eine Vorrichtung zur über den Rohrquerschnitt mittelnden Erfassung der Dämpfung und Phasenverschiebung von Mikrowellen im transportierten Gut.

Es soll durch die Messung der Dämpfung und der Phasenverschiebung zwischen zwei Antennen der Massedurchsatz durch das Rohr bestimmt werden. Bei der durch Turbulenzen verursachten starken Schwankung der Beladung über den Rohrquerschnitt (Strähnenbildung) ist eine Messung zwischen zwei gegenüberliegenden Punkten der Mantelfläche des Rohres für viele Anwendungen unmöglich, da sich kein repräsentativer Meßort finden läßt.

Durch gepulste Messung von in unterschiedlichen azimutaler Orientierung eingekoppelten Mikrowellen über eine längere Rohrstrecke wird eine Mittelung der über den Querschnitt ungleichmäßigen Beladung erreicht. Hierdurch ist eine automatisierte Echtzeitmessung der Staubbeladung möglich.

## Beschreibung

Die Erfindung bezieht sich auf ein Verfahren und eine Vorrichtung zur berührungsfreien Messung des Massedurchsatzes in Förderleitungen bei Zweiphasenströmungen mit Hilfe von Mikrowellen und findet vorrangig bei der Verbrennung von Kohlestaub in Kohlekraftwerken Anwendung.

Der Kohlestaub wird also in Form einer Zweiphasenströmung durch die entsprechenden Rohrleitungen transportiert, und es treten bei den geforderten Geschwindigkeiten turbulente Strömungen ein. Die bekannte eingesetzte Fördertechnik verursacht bei festen Stoffen, die mittels eines Trägergases transportiert werden, die Bildung von Strähnen erhöhter Dichte, die sich durch Wirbel ausbilden und nicht ortsfest sind.

Eine Messung der Staubbelastung ist unter anderem für Kohlekraftwerke sehr wichtig, da der sich durch Rohrleitungen zum jeweiligen Brenner zu transportierende Kohlestaub nicht gleichmäßig über den Rohrquerschnitt verteilt, sondern sich als sogenannte Strähne ausbildet, die eine wesentlich höhere Staubdichte aufweist, als der Rest des Rohrquerschnittes.
Dies führt zum einen dazu, daß es an Verzweigungspunkten der Rohre zur ungleichen Aufteilung des Kohlestaubes auf die jeweiligen Rohre kommt, was eine unter- bzw. überstöchiometrische Verbrennung der Kohle in den jeweiligen Brennern zur Folge hat. Eine andere Folge hiervon ist, daß eine Messung der Staubbeladung an einem Punkt in der Leitung unmöglich ist, da sich aufgrund des sich zeitlich ändernden Strömungsverhaltens des Staubes in der Leitung kein repräsentativer Meßpunkt finden läßt. Es werden deshalb in regelquerschnitt gemacht, bei denen die Kohle durch ein isokenetisch absaugendes Rohr an mehreren über den Querschnitt verteilten Messpunkten manuell abgesaugt wird. Solche Messungen dauern lange und liefern erst nach Stunden Ergebnisse. Sie liefern die Grundlage für eine starre Einstellung der Schieber in den Rohrleitungen, welche die Staubverteilung auf die einzelnen Leitungen beeinflussen. Die Schieber können daher nur manuell fest auf gewisse Punkte eingestellt werden.

Eine Regelung, die sich an verschiedene Lastfälle und Kohlesorten im Kraftwerk anpaßt, ist nicht möglich.

Aufgabe der vorliegenden Erfindung ist es, ein Verfahren und eine Vorrichtung zur berühungsfreien Messung des Massedurchsatzes in Förderleitungen, insbesondere für Förderleitungen von Kohlestaub bei einer Zweiphasenströmung mit Hilfe von Mikrowellen zu entwickeln, welches die Beladungsschwankung von Kohlestaub bei der Beschickung von Großfeuerungsanlagen über den gesamten Querschnitt des Förderrohres quantitativ erfaßt, eine mittelnde Messung ermöglicht, um somit die Kohlestaubverteilung in Großfeuerungsanlagen in Echtzeit regeln zu können.

Erfindungsgemäß wird die Aufgabe durch die im Anspruch 1 herausgestellten Merkmale gelöst.

Besondere Ausgestaltungen der Erfindung sind Gegenstand der Unteransprüche.

Dabei stützt sich das erfindungsgemäße Verfahren und die dazugehörende Vorrichtung allgemein auf das bekannte Verfahren der Messung von Mikrowellen, die durch das zu fördernde Gut, dem Kohlestaub, gestrahlt werden. Dabei wird berücksichtigt, daß die materialabhängige komplexe Dielektrizitätskonstante eine Dämpfung und Phasenverschiebung von Mikrowellen bewirkt, sofern sie einen Imaginärteil besitzt.

So sind die Dielektrizitätskonstanten E* für Kohle und Wasser bei 3 GHz wie folgt:

| Kohle: | Wasser: |
|---|---|
| E' = 2,5 | E' = 81 |
| E'' = 0,3 | E'' = 12, |
| wobei E* = E'+ jE'' ist. | |

E' ist der Realteil der komplexen Dielektrizitätskonstanten und E'' der Imaginärteil der komplexen Dielektrizitätskonstanten.

Besteht das im Rohr ruhende Gut nur aus einem Stoff, so kann aus der Absorption und der Phasenverschiebung die Masse des durchstrahlten Gutes bestimmt werden. Setzt sich das zu transportierende Gut aus mehreren Stoffen zusammen, so wird die Absorption durch einen effektiven Absorptionskoeffizienten bestimmt, der sich bekanntlich aus den einzelnen Absorptionskoeffizienten der verschiedenen Stoffe zusammensetzt. So kann bei einer konstanten Zusammensetzung des Kohlestaubes das Verhältnis Kohlestaub zu Tragluft bestimmt werden.

Bei Befüllung des Rohres mit einem Trägermedium (Luft, Wasser) und einem zu transportierenden Gut (Kohle) kann unter folgenden Voraussetzungen das Verhältnis der beiden Medien zueinander bestimmt werden:
a) Beide Medien haben eine jeweils zeitlich konstante stoffliche Zusamensetzung, was das Dämpfungsverhalten und Phasenverschiebung von Mikrowellen anbelangt.
b) Die beiden Medien unterscheiden sich hinreichend in ihrem Dämpfungs- oder Phasenverschiebungsverhalten von Mikrowellen, bezogen auf das von Mirkowellen durchstrahlte Volumen (die Messung des Rohres gefüllt mit Medium 1 muß sich deutlich unterscheiden von der Messung des Rohres gefüllt mit Medium 2).

Forderung a) ist für den Fall der Messung in der Kohlestaubleitung erfüllt, da durch das große Volumen der vorgeschalteten Mühle die Anderung der stofflichen Zusammensetzung von den Zeitkonstanten her langsam im Vergleich zur Strömungsdynamik im Rohr ist und die Stoffe durch ein vorgeschaltetes Schnellbestimmungssystem (z.B. Schnellbestimmung der Restfeuchte des Kohlenstaubes) einzeln vermessen werden können. Forderung a) kann sogar entfallen, falls es um eine reine Differenzmessung zwischen zwei Leitungen geht. Hier ist die einzige Forderung, daß die Stoffe der jeweiligen Phasen in den jeweiligen Leitungen jeweils die gleiche Zusammensetzung haben.

Das erfindungsgemäße Verfahren beruht auf einer berührungsfreien Messung, bei der die Mikrowellenleistung von außen in das Rohrinnere eingebracht und ebenso die durch das Rohr transmittierte Leistung wieder nach Außen gekoppelt wird. Dies geschieht in der Form, daß über den Querschnitt der Förderleitung für den Kohlestaub eine mittelnde Messung der Beladungsdichte und des Massedurchsatzes in dieser Leitung gemessen wird, was wiederum dergestalt erfolgt, daß Mikrowellen aus einem zuführenden Hohlleiter, Koaxleiter oder Streifenleiter ausgekoppelt und in die Rohrleitung eingekoppelt werden, um somit eine Strecke der Rohrleitung zu durchlaufen. In axialer Versetzung zur Einkoppelstelle, die hinreichend groß ist, um eine ausreichende Empfindlichkeit zu gewährleisten, wird die Welle wieder durch eine Öffnung in der Rohrwandung teilweise aus der Rohrleitung ausgekoppelt und sowohl in der Phase, als auch in der Dämpfung mit der eingekoppelten Welle verglichen. Dies geschieht bekanntermaßen durch Führung der Mikrowelle über einen Referenzleiter und anschließender Aufschaltung auf einen Mischer.

Es gehört zur Erfindung, daß die EM-Welle (Elektro-Magnetische Welle) in verschiedenen azimutalen Orientierungen nacheinander pulsweise in das Rohr eingekoppelt wird, wobei die Koppelöffnung, welche gerade Mikrowellen eingekoppelt als "aktive" Koppelöffnung bezeichnet ist. Die anderen Öffnungen sind als "passive" Koppelöffnungen gekennzeichnet. Die Pulsung erfolgt so schnell, daß während der Zeitdauer einer Pulsfolge sich die Lage des Kohlestaubes nicht wesentlich verändert. Hierdurch wird die Kohlenstaubsträhne wechselnd von hohen und niedrigen Feldstärken durchsetzt. Die Summe all dieser Messungen kann mittelnd ausgewertet werden. Die ungleiche Verteilung der Kohlestaubkonzentration beeinflußt somit die Messung weit weniger, als das bei der Messung nur eines Wellenpulses der Fall wäre. Des weiteren werden in unterschiedlichen azimutalen Positionen, unterschiedliche Phasenverschiebungen auftreten, die ebenfalls mittelnd ausgewertet werden.

Da die Kohlestaubsträhnen nicht ortsfest sind, sondern über den Rohrquerschnitt wandern, kann durch eine mehrfach durchgeführte Messung, der Art wie oben beschrieben, ein Meßwert mit hoher Repräsentativität ermittelt werden. Neben der nacheinander gepulsten Ansteuerung einer Antennenkoppelöffnung kann auch eine paarweise Anpulsung von jeweils 2 Koppelöffungen erfolgen. Hierdurch läßt sich eine zirkular polarisierte Welle einkoppeln, die aufgrund ihres rotierenden E-Feldes (elektrisches Feld) eine weitere Mittelung bei der Messung bewirkt. Die Zahl der Öffnungen sowie deren Ansteuerung werden durch die Stömungsverhältnisse im Rohr sowie durch den jeweiligen Anwendungsfall (z.B. erforderliche Genauigkeit) bestimmt.

Eine berührungsfreie Messung wird in der Form realisiert, indem die Koppelöffnungen, notwendig für das Einbringen der Mikrowellen in das Rohrinnere der Förderleitung als auch für das Auskoppeln aus der Förderleitung, unmittelbar und direkt in die Förderleitung eingebracht werden.

Hierzu kann ein mit Koppelöffungen arbeitender Koppler verwendet werden, was erfindungsgemäß durch das Anbohren der Rohrleitung und Ankoppelung eines Streifenleiters erfolgt. Diese Ausführung ist besonders kostengünstig, da sich derartige Leiter als kaschierte Folien oder als geätzte kupferbeschichtete Leiterplatte in großen Mengen kostengünstig herstellen lassen. Bei den räumlichen Ausdehnungen der Leitungssysteme in Kraftwerken der Vielzahl der vorhandenen Brenner und somit der erforderlichen hohen Anzahl von Meßpunkten, ist die erfindungsgemäße kostengünstigere Ankoppelungsweise ein entscheidener Vorteil.

Hierdurch lassen sich auch richtkoppelartige Einkoppelungen realisieren, mit denen den sich ausbreitenden EM-Wellen eine Vorzugsrichtung gegeben werden kann. Dies ist in der Nähe von Verzweigungspunkten günstig, da somit unerwünschte Reflexionen gemindert werden können.

Mit der erfindungsgemäßen Vorrichtung wird es zum ersten Mal möglich, die Beladungsschwankung von Kohlestaub bei der Beschickung von Großfeuerungsanlagen über den gesamten Querschnitt des Rohres quantitativ zu erfassen. Die starke Vergleichmäßigung des Kohlestaubes in der vorgeschalteten Kugelmühle hinsichtlich seiner Zusammensetzung ermöglicht somit eine hinreichend genaue Messung der Staubbeladung. Da die Meßwerte in Echtzeit vorliegen, eignet sich die vorgeschlagene Vorrichtung zur Regelung verbrennungsspezifischer Parameter (z.B. Sekundärluft der Brenner).

Die Erfindung soll mit nachfolgenden Ausführungsbeispiel näher erläutert werden.

Die dazugehörige Zeichnung zeigt in
- Fig. 1 :: ein als Schlitzkoppler ausgeführter Rohrabschnitt, als Sende- und Empfangskoppler
- Fig. 2 :: die Einkoppelung einer TE-Welle (Grundmode) in unterschiedlichen azimutalen Orientierungen
- Fig. 3 :: Schaubild der Einkoppelung eines rotierenden E-Feldes
- Fig. 4 :: Streifenleiter zur Ankoppelung an die Förderleitung
- Fig. 5 :: eine Schnittdarstellung der Förderleitung mit Ankoppelung der Streifenleiter.

Zur Realisierung bzw. Anwendung des erfindungsgemäßen Verfahrens wird eine Lösung vorgestellt, bei der unmittelbar in die Förderleitung für den Kohlestaub die entsprechenden Öffnungen eingebracht werden, ohne daß an der Förderleitung weitere Veränderungen vorzunehmen sind.

Diese Öffnungen werden in ihrer Gesamtheit als Öffnungs- bzw. Schlitzmuster bezeichnet und die Anordnung und Ausgestaltung wird axial durch eine charakteristische Kohärenzlänge, dem Abstand zwischen zwei Empfangsantennen, der turbulenten Strömung und einem für eine hohe Messempfindlichkeit optimalen Abstand zwischen Sender und Empfänger bestimmt. Das Schlitzmuster hängt von dem Absorbtionsverhalten des Gutes und von den Strömungsverhältnissen im Rohrstück ab.

Die Einspeisung der Mikrowellenleistung in das Rohrinnere über das Schlitzmuster kann auf verschiedene Arten erfolgen. So beispielsweise mit Hilfe von zu den jeweiligen Schlitzen führenden Hohlleitern.

Die erforderlichen Empfangsantennen sind dann axial zu den Schlitzen/Öffnungen in einem Abstand montiert, der kleiner ist als eine charakteristische Korrelationslänge des strömenden Fördergutes. Dadurch wird durch eine Kreuzkorrelation der eingestreuten bzw. reflektierten Meßsignale eine Ermittlung der Laufzeit von Antenne zu Antenne erreicht.

Falls die Strömung nicht hinreichend turbulent ist, kann durch Injektion eines Trägergases oder einer Flüssigkeit, die ein anderes Transmissionsverhalten als eines der beiden Medien hat, eine kurzzeitige lokale Turbulenz erzeugt werden, die zum Zwecke der Geschwindigkeitsmessung dient.

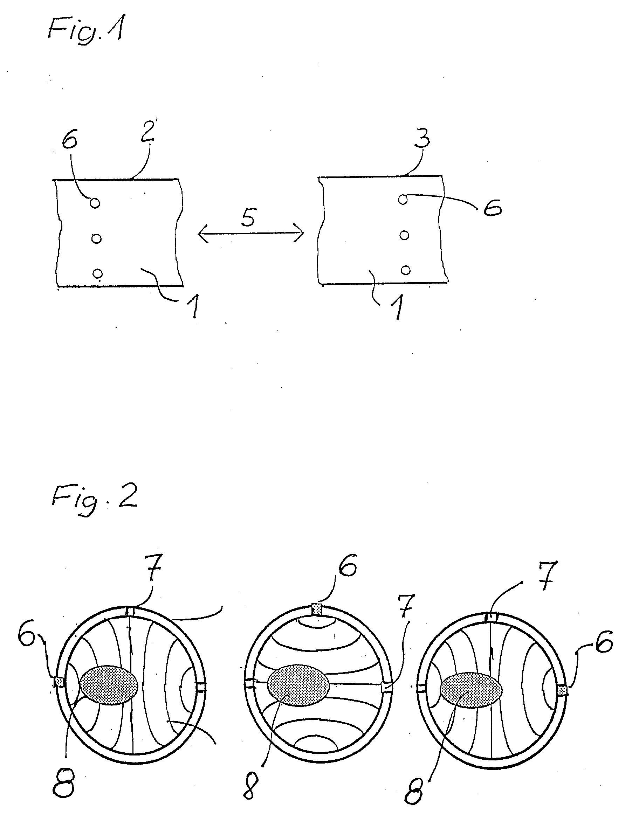

Die in den Fig. 1 - 5 dargestellte Ausführungsvorrichtung dient gleichfalls zur über den Querschnitt mittelnden Messung der Beladungsdichte und des Massedurchsatzes einer Staubleitung, in der ein stark verdünnter Feststoff durch ein anderes Medium (Flüssigkeit oder Gas) transportiert wird.

Hierbei dient ein Rohrstück 1 sowohl als Rundhohlleiter als auch als Sende - und Empfangskoppler 2, 3 (Fig. 1).

Es werden Mikrowellen aus einem zuführenden Hohlleiter, Koaxialleiter oder Streifenleiter 4 ausgekoppelt und in die Rohrleitung 1 eingekoppelt, um somit eine Strecke 5 der Rohrleitung 1 zu durchlaufen. In axialer Versetzung zur Einkoppelstelle, die hinreichend groß ist, um eine ausreichende Empfindlichkeit zu gewährleisten, wird die Welle wieder durch eine Öffnung 6 in der Rohrwandung des Rohrstückes 1 teilweise aus der Rohrleitung ausgekoppelt und sowohl in der Phase, als auch in der Dämpfung mit der eingekoppelten Welle verglichen. Dies geschieht bekanntermaßen durch Führung der Welle über einen Referenzleiter und anschließende Aufschaltung auf einen Mischer.

Das Rohrstück 1 selbst ist als Schlitz- oder Lochkoppler ausgebildet, und besitzt gleichfalls in der Wandung des Rohrstückes 1 entsprechende Öffnungen 6, die sowohl als Einkoppelöffnungen als auch als Auskoppelöffnungen fungieren. Dabei ist das Rohrstück 1 entsprechend seiner Aufgabe und Funktion in zwei Teilstrecken unterteilt, wobei das Teilstück 2 dazu dient, die Mikrowellen einzukoppeln und das Teilstück 3, die Mikrowellen wieder auszukoppeln. Zwischen diesen beiden Teilstücken 2, 3 befindet sich die Meßstrecke, welche mit 5 gekennzeichnet ist und parallel dazu eine nicht mehr dargestellte Referenzleitung, in der sich die eingeleitete Welle ungestört (keine Dämpfung und keine Phasenverschiebung) ausbreiten kann.

Weiterhin gehört zu dieser Einrichtung ein Mischer, in der die über die Rohrleitung und über die Referenzstrecke gelaufenden Wellen auf ihren Phasenunterschied hin gemessen werden. Es werden vom Teilstück 2, dem Sendekoppler und vom Teilstück 3, dem Empfangskoppler, die entsprechenden Koppelöffnungen 6 angesteuert bzw. auf Empfang geschaltet, die sich in gleicher azimutaler Position befinden. So wird z. B. die in Figur 1 dargestellte obere Koppelöffnung 6 des Sendekopplers 2 gleichzeitig mit der oberen Koppelöffnung 6 des Empfangskopplers 3 betrieben.

Nach dieser Messung werden die mittleren Koppelöffnungen angesteuert u.s.w. Die Feldverteilung, die sich bei drei Koppelöffnungen mit 90 Grad azimulater Versetzung der Einkoppelung der Grundmode einer TE-Welle ergibt, ist in Fig. 2 dargestellt.

Alternativ hierzu läßt sich auch durch zwei Koppelöffnungen 6, 7 (Fig. 4), die in einem Azimutwinkel von 90 Grad zueinander angebracht sind, eine zirkular polarisierte Welle in das Rohrstück 1 einkoppeln. Dies läßt sich z.B. durch Anregung der beiden Koppelöffnungen 6, 7 mit einer an den jeweiligen Einkoppelstellen um den Phasenwinkel π/4 versetzten EM-Welle erreichen. Auf diese Weise entsteht ein rotierendes E-Feld, das durch zwei Koppelöffnungen wieder ausgekoppelt werden kann. Hierdurch werden mit nur einer Messung die Kohlenstaubsträhnen 8 von einem E-Feld in rotierender azimutaler Orientierung durchsetzt. Je nach Anwendungsfalls können auch hier wieder mehrere Lochpaare zur Messung dienen, die, wie oben beschrieben, gepulst angesteuert werden.

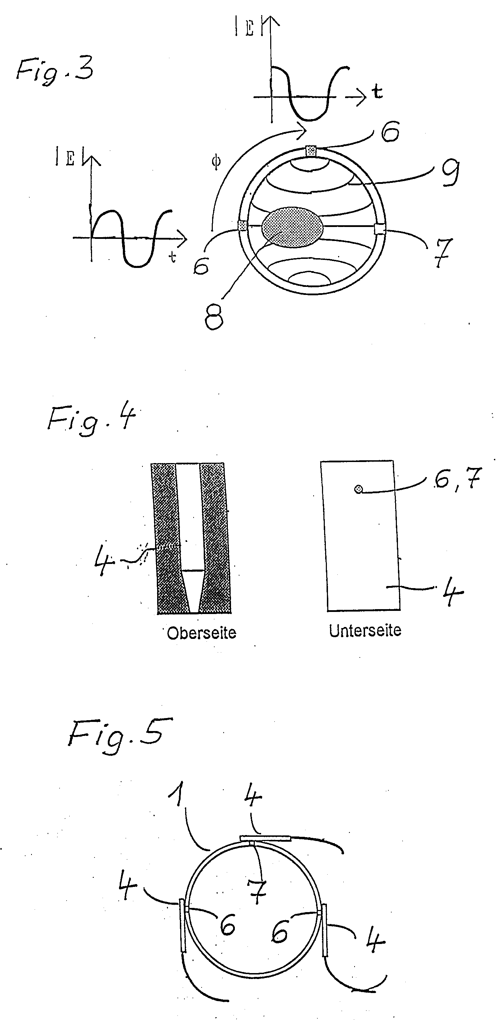

In dieser Figur 2 sind die Koppelöffnungen, die aktiven Einkoppelöffnungen mit 6 und die passiven Einkoppelöffnungen mit 7 bezeichnet. Den E-Feldlinienverlauf der TE-Welle geben die Linienverläufe 9 wider und die sich im Inneren des Rohrstückes 1 ausbildende Kohlenstaubsträhne ist mit 8 gekennzeichnet. Die Figur 3 verdeutlicht nochmals den entsprechenden Verlauf der E-Feldlinien 9 der TE-Welle. Gleichzeitig ist aus den gezeigten Schaubildern der Verlauf der Feldstärke an der Einkoppelstelle über die Zeit abzulesen.

Allgemein muß ausgeführt werden, daß durch die Beladung der Förderleitung mit Kohlenstaub sich die Laufzeit der EM-Welle erhöht. Der Unterschied zwischen den Laufzeit einer sich ungestört ausbreitenden Welle und der durch das Fördergut laufenden Welle ist umso größer, je länger die Meßstrecke ist, da sich die Verzögerung je Wellenlänge auf der Gesamtstrecke zu einer Gesamtverzögerung addiert, die n-mal der Verzögerung je Wellenlänge ist (bei Gesamtlänge/Wellenlänge = n). Hierzu kommt eine Dämpfung der EM-Welle, die ebenfalls von der Länge abhängt.

Zur Messung des Phasenunterschiedes von Meßsignal zu Referenzsignal ist eine Phasenverschiebung zwischen 0 und 180 Grad am besten geeignet, da bei diesem Winkel keine Mehrdeutigkeiten des Phasenwinkels auftreten können. Die Länge der Meßstrecke wird also so gewählt werden, daß bei den vorkommenden Beladungsfällen diese Phasenwinkel eingehalten werden.

In den Figuren 4 und 5 sind einmal die auf die entsprechenden Koppelöffnungen 6,7 anzubringenden Streifenleiter 4 dargestellt, wobei die Figur 4 einmal die Oberseite des Streifenleiters 4 und zum anderen die Unterseite des Streifenleiters 4 zeigt und in der Figur 5 die unmittelbare Anordnung der Streifenleiter 4 auf dem Rohrstück 1 gezeigt wird.

Da die verwendete Mikrowellenfrequenz vom Kaliber der Förderleitung abhängt und die Förderleitung als Rundhohlleiter Hochpasscharakter hat, eignet sich vorzugsweise die Grundmode der EM-Welle für die Messung, da eine EM-Welle tieferer Frequenz in der Leitung nicht ausbreitungsfähig ist. Somit kann keine andere tiefere Mode entstehen, die sich als störend für die Phasenmessung erweist. Die Vorrichtung muß somit mit der geeigneten Frequenz betrieben werden.

Als anregende Quelle kann z.B. ein YIG-Oszillator verwendet werden.

Die Anordnung kann durch einen weiteren Empfangsschlitzkoppler auf der anderen Seite des Sendekopplers ergänzt werden, um durch eine Korrelationsmessung der Staubdichte auf die Laufzeit des Kohlestaubes schließen zu können.

## Patentansprüche

1. Verfahren zur berührungsfreien Messung des Massedurchsatzes in Förderleitungen bei Zweiphasenströmungen mit Hilfe von Mikrowellen, vorzugsweise für die Messung des Massedurchsatzes von Kohlestaub durch Förderleitungen in Kohlekraftwerken, unter Beachtung der Mikrowellenlaufzeit und/oder Mikrowellendämpfung bei unterschiedlichem dielektrischen Verhalten der Phasen des Fördergutes, dadurch gekennzeichnet, daß
- ein Teil der Förderleitung als rundhohlleiterartige Meßstrecke dient,
- die Mikrowellenein- und auskopplung in die Förderleitung axial, azimutal und zeitlich versetzt pulsartig erfolgt,
- sich die eingekoppelte Mikrowelle bezüglich des Rohrdurchmessers und der mittleren Dielektrizitätskonstante der Messtrecke durch geeignete Wahl der Anregefrequenz beispielsweise als Grundmode ausbreitet,
- die Mikrowellen azimutal mit einer bekannten Phasendifferenz derart angesteuert werden, daß die in der Förderleitung eingekoppelte Mikrowelle zirkular oder elliptisch polarisiert ist,
- die Messung der Mikrowellen entsprechend der erforderlichen Empfindlichkeit sowie einer Mittelung über den Querschnitt der Förderleitung, axial versetzt zur Einkoppelstelle erfolgt,
- zur Ermittlung des Massedurchsatzes mehrere Fequenzen herangezogen sowie mehrere Sende- und Empfangseinrichtungen eingesetzt werden und
- zur Dichtebestimmung die Laufzeitenmessung von Dichteschwankungen abgeleitet und die Laufzeiten selbst über die Bildung der Kreuzkorrelationsfunktion der Messignale ermittelt werden.

2. Vorrichtung zur Durchführung des Verfahrens nach Anspruch 1, dadurch gekennzeichnet, daß
die Öffnungen (6,7) in der Form eines Schlitz- oder Lochmusters unmittelbar in die Förderleitung für den Kohlestaub eingebracht und axial sowie azimutal bezüglich der Aspektverhältnisse, der azimutalen Teilung, der axialen Versetzung und der helikalen Neigung in einem Rohrstück (1) angeordnet sind.

3. Vorrichtung nach Anspruch 2, dadurch gekennzeichnet, daß
die Mikrowellenzu- und ableitungen isolierte Leiterplatten, sogenannte Streifenleiter sind, deren eine Seite mit dem Rohrstück (1) leitend verbunden ist und oberhalb der Koppelöffnungen (6,7) eine kongruente Aussparung aus Kupfer aufweist, während die andere Seite den Koppelöffnungen (6,7), den Mikrowellenlängen und dem Dielektrikum angepaßt, überragend angeordnet ist.

4. Vorrichtung nach den Ansprüchen 2 und 3, dadurch gekennzeichnet, daß
die Öffnungen für den Ein- und Austritt der Mikrowellen mittels dielektrischer Fenster (10) verschlossen sind, um einen unerwünschten Austritt des Kohlestaubes aus der Förderleitung zu verhindern.

5. Vorrichtung nach den Ansprüchen 2 bis 4, dadurch gekennzeichnet, daß
ein Sendekoppler (2) und ein Empfangskoppler (3) in axialer Versetzung der Meßstrecke (5) im Rohrstück (1) angeordnet sind und Koppelöffnungen (6,7) aufweisen.

6. Vorrichtung nach den Ansprüchen 2 bis 5, dadurch gekennzeichnet, daß
alternativ zwei Koppelöffnungen (6,7) in einem Azimutwinkel von 90 Grad zueinander im Rohrstück (1) vorgesehen sind und somit die Einkoppelung einer zirkular poralisierten Mikrowelle in das Rohrstück (1) gewährleisten, was durch die gleichzeitige Anregung der beiden Koppelöffnungen (6,7) mit einer an den jeweiligen Einkoppelstellen um den Phasenwinkel π/4 versetzten EM-Welle erreicht wird.

7. Vorrichtung nach Anspruch 6, dadurch gekennzeichnet, daß
mehrere Koppelöffnungen (6,7), die als Koppelöffnungspaare versetzt über dem Azimut angeordnet sind, nacheinander pulsweise angesteuert werden.
